# FASCICULE DE BREVET EUROPEEN

(11) **EP 1 518 734 B1**
(45) Date de publication et mention de la délivrance du brevet: **20.04.2011**
(21) Numéro de dépôt: 04360077.4
(22) Date de dépôt: 03.09.2004
(51) Int. Cl.: B60J 10/00, B60J 10/08

(54) **Joint périmétrique tubulaire à monter sur le rebord d'encadrement d'une ouverture, notamment de carrosserie automobile**
Rohrförmge Umfangsdichtung zum Anbringen auf den Rand eines Öffnungsrahmens , insbesondere auf eine Kraftfahrzeugkarosserie
Perimetric tubular sealing to be mounted on the edge of an opening frame, especially on an automotive body

(30) Priorité: 23.09.2003 FR 0311140
(43) Date de publication de la demande: 30.03.2005
(73) Titulaire: Rehau SA, 57340 Morhange (FR)
(72) Inventeur: Perrin, Jean-Philippe, 57380 Faulquemont (FR)
(74) Mandataire: Metz, Paul

(56) Documents cités:
- EP-A- 0 329 964
- EP-A- 0 360 997
- EP-A- 1 060 927
- FR-A- 1 337 947
- FR-A- 2 566 723
- FR-A- 2 650 233
- FR-A- 2 839 476
- GB-A- 2 192 221

## Description

La présente invention concerne un joint profilé périmétrique destiné à être monté sur un rebord métallique, plastique ou composite s'étendant notamment dans l'encadrement d'un ouvrant de carrosserie automobile tel que par exemple un capot moteur, une portière, un coffre ou une vitre ouvrante non-coulissante.

Pour assurer la protection mécanique, l'étanchéité et une certaine insonorisation au niveau des encadrements dits « dormants » de carrosserie automobile, il est connu de garnir les rebords de ces encadrements par un joint périmétrique.

De façon classique, ces joints sont des profilés constitués d'une partie d'accrochage permettant la mise en place avec retenue du joint sur le rebord et d'un bourrelet souple d'étanchéité sur lequel vient s'appuyer l'ouvrant en position de fermeture afin de réaliser l'étanchéité et une certaine insonorisation.

Le plus souvent, la partie d'accrochage présente une section de forme générale en U devant être chaussée à pincement sur le rebord. Elle est réalisée en une matière relativement rigide, généralement en matière plastique rigide ou en caoutchouc dur, éventuellement renforcée par une armature métallique.

Pour améliorer la retenue du joint sur le rebord de tôle, les faces intérieures en regard des deux branches de la partie d'accrochage en forme de U comportent habituellement des lèvres de retenue se faisant face.

Le bourrelet d'étanchéité est un profilé tubulaire creux réalisé dans un matériau plus souple, habituellement en caoutchouc thermoplastique ou non, moussé, cellulaire ou compact, qui permet un écrasement par compression de celui-ci. Il s'étend longitudinalement le long d'une des faces extérieures de la partie d'accrochage déterminée en fonction de l'inclinaison du rebord de carrosserie et de la position relative de l'ouvrant. Dans le cas par exemple d'un joint périmétrique de capot moteur, le bourrelet d'étanchéité est solidarisé à la face supérieure de la partie d'accrochage.

Ces deux parties constitutives du joint peuvent être réalisées simultanément par une opération de coextrusion ou être réalisées séparément puis assemblées par collage au cours d'une étape ultérieure.

Les joints d'étanchéité profilés de ce type sont largement connus et ont été décrits dans de nombreuses demandes de brevet, comme par exemple dans les demandes FR 2.629.128, EP 0.805.058, FR 2.502.563, EP 0.427.372, EP 0.300.736, WO 97/08003, EP 0.425.083, EP 1.123.827, EP 1.138.538, etc...

La demande de brevet FR 2650233A au nom de G.I.E. TECHNISTAN décrit ainsi par exemple un joint pour véhicule qui comporte un élément de fixation en U à chausser sur la feuillure de la carrosserie au niveau des portes du véhicule, un bourrelet tubulaire d'étanchéité collé sur l'un des flancs de l'élément de fixation en U et une lèvre externe d'aspect servant à recouvrir la zone située entre la garniture intérieure du véhicule et le bourrelet tubulaire d'étanchéité.

Ces joints profilés connus présentent un inconvénient rencontré lors du montage de ces joints sur un rebord de carrosserie dans le cas d'un changement de direction à faible rayon de courbure sensiblement perpendiculaire au flanc du rebord.

Lorsque le rayon de courbure n'est pas trop important, la partie d'accrochage est généralement suffisamment souple pour pouvoir fléchir dans une direction globalement perpendiculaire à son flanc, afin de pouvoir suivre la courbure. Cependant au niveau de la courbure, le bourrelet tubulaire se trouve étiré du côté extérieur de la courbure et comprimé du côté intérieur de celle-ci. Il se forme sur le côté du bourrelet tubulaire situé à l'intérieur de la courbure une série de plis successifs particulièrement inesthétiques. Il se produit en outre un tassement désavantageux du joint en hauteur, ce qui diminue ses qualités d'étanchéité et d'insonorisation.

Dans l'art antérieur, il a été proposé afin limiter la déformation du bourrelet tubulaire, dans le cas d'une prise de courbure dont le rayon est sensiblement parallèle au plan du flanc du profilé, de le rigidifier en coextrudant dans son espace intérieur un insert en matière élastique reposant contre sa paroi intérieure de manière à pouvoir coulisser librement par rapport à celle-ci. Une telle solution a ainsi été décrite pour un joint de pare-brise dans la demande de brevet REHAU n° EP 0360997A.

Cependant, rien n'a a été proposé jusqu'ici pour limiter la déformation du bourrelet tubulaire dans le cas d'une courbure à rayon sensiblement perpendiculaire au plan du flanc du profilé

Dans ce cas et pour toutes les raisons précédemment évoquées, l'opérateur-poseur est souvent obligé de couper d'onglet le joint au niveau de ce changement de direction, puis de raccorder les deux morceaux de part et d'autre de l'angle par exemple au moyen de liaisons d'entretoisement. Cette opération est parfois problématique. En outre, elle rallonge le temps nécessaire à la mise en place du joint et augmente le coût de pose.

Le but de l'invention est de fournir un joint profilé périmétrique de structure similaire à ceux précédemment décrits, c'est-à-dire comportant une partie d'accrochage à section de forme générale en U et un bourrelet tubulaire souple d'étanchéité, mais ne présentant pas cet inconvénient.

Le joint selon l'invention est destiné à être monté sur une bordure de carrosserie pouvant être constituée par un retour de tôle dressé ou par la juxtaposition coplanaire d'au moins deux retours de tôle réunis par exemple par soudage par points.

Avantageusement, le joint selon l'invention permet une prise de rayon sensiblement perpendiculaire à son flanc latéral sans plis inesthétiques du bourrelet tubulaire. En outre, il limite l'écrasement en hauteur du joint, permettant ainsi un meilleur contact avec l'ouvrant ce qui améliore l'étanchéité et l'insonorisation.

De ce fait, il est possible d'utiliser un unique tronçon continu de joint profilé selon l'invention, même en cas de rebord non rectiligne présentant des zones de changement de direction à faible rayon de courbure sensiblement perpendiculaire au flanc du rebord. Les découpes puis les raccordements problématiques du joint sont ainsi évités.

Pour cela, le bourrelet d'étanchéité est relié à la partie d'accrochage par une bande de liaison excentrée par rapport à l'axe de la fibre neutre du pliage de prise de courbure dans une direction globalement perpendiculaire au flanc latéral du profilé.

En cas de prise de courbure dans une direction globalement perpendiculaire au flanc latéral du profilé, le bourrelet d'étanchéité bascule en direction de la partie d'accrochage au lieu de se déformer, ce qui évite l'apparition de plis inesthétiques.

De manière préférentielle, la bande de liaison n'est pas parallèle au plan de la partie d'accrochage, mais présente un angle d'inclinaison favorisant le basculement du bourrelet d'étanchéité. Elle comporte en outre une amorce de pliage sous la forme d'une zone d'épaisseur réduite servant de charnière.

Avantageusement, la partie d'accrochage peut comporter un relief d'appui contre lequel vient s'appuyer le bourrelet d'étanchéité en fin de basculement, ce qui limite son basculement lors de la prise de rayon.

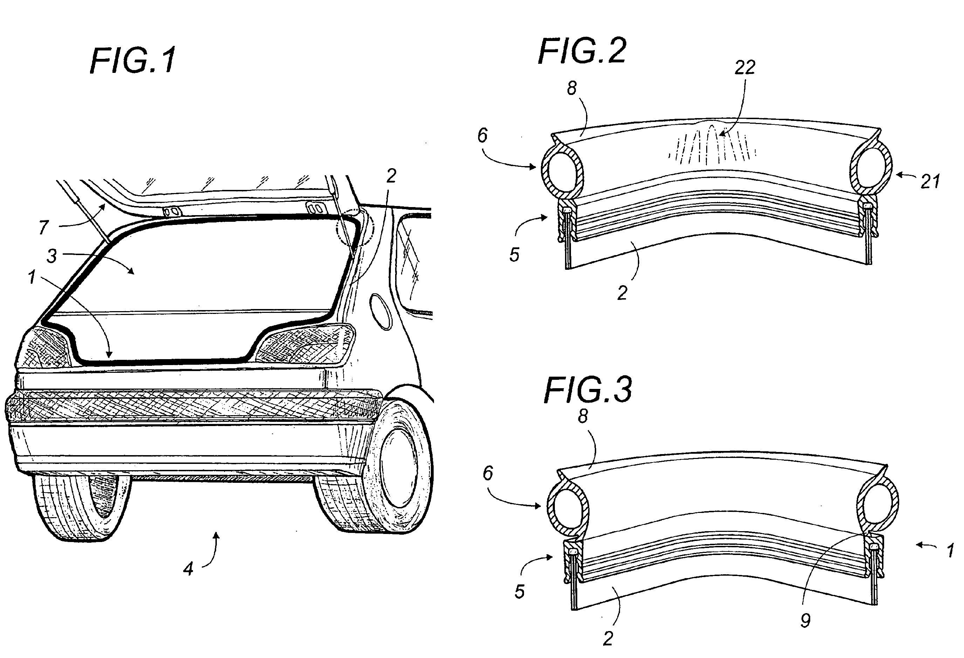

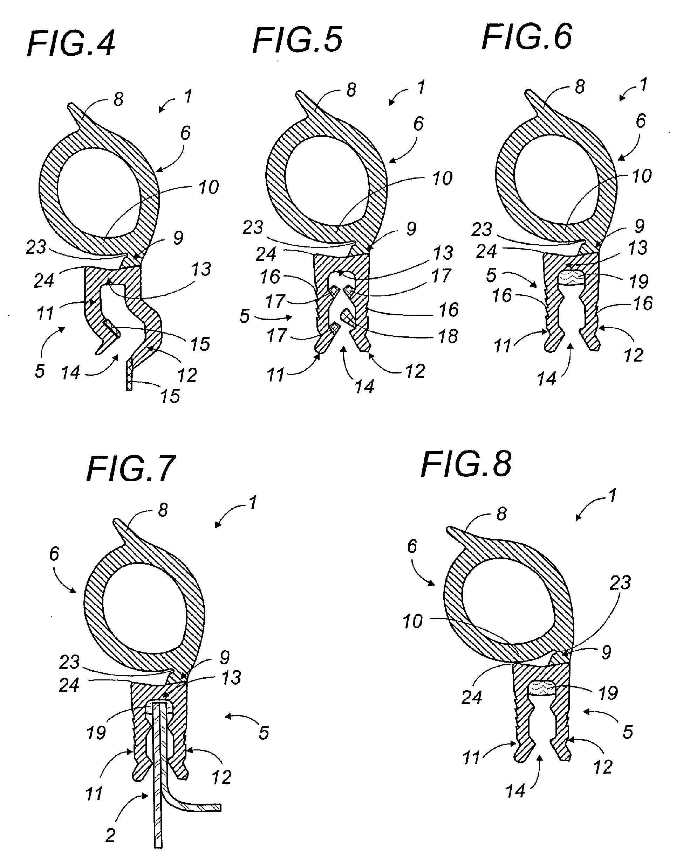

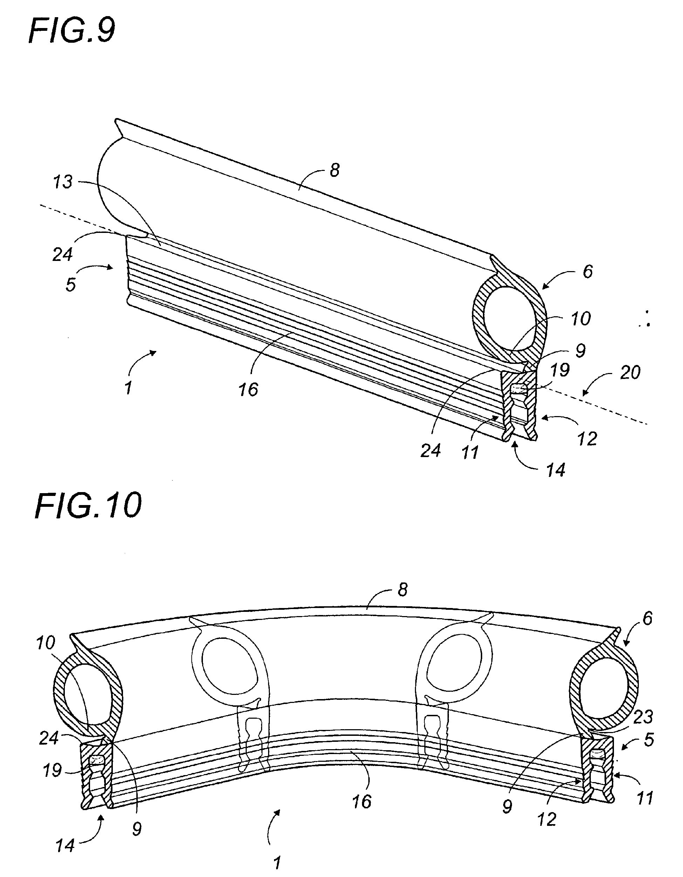

D'autres caractéristiques et avantages de l'invention apparaîtront à la lecture de la description détaillée qui va suivre, description faite en référence aux dessins annexés, dans lesquels :
. la figure 1 est une vue d'ensemble en perspective de l'arrière d'une voiture dont l'encadrement de l'ouverture du coffre est équipé d'un joint périmétrique du type de celui de l'invention ;
. la figure 2 est un agrandissement du détail encerclé de la figure 1 représentant une zone courbe, emportée et ramenée à l'horizontale, de l'encadrement équipé d'un joint périmétrique selon l'art antérieur ;
. la figure 3 est un agrandissement du détail encerclé de la figure 1 représentant une zone courbe, emportée et ramenée à l'horizontale, de l'encadrement équipé d'un joint périmétrique selon la présente invention ;
. la figure 4 est une vue en coupe transversale d'un joint périmétrique à l'état libre selon un premier mode de réalisation de l'invention, le bourrelet d'étanchéité étant en position droite ;
. la figure 5 est une vue en coupe transversale d'un joint périmétrique à l'état libre selon un deuxième mode de réalisation de l'invention, le bourrelet d'étanchéité étant en position droite ;
. la figure 6 est une vue en coupe transversale d'un joint périmétrique à l'état libre selon un troisième mode de réalisation de l'invention, le bourrelet d'étanchéité étant en position droite ;
. la figure 7 est une vue en coupe transversale d'un joint périmétrique selon le troisième mode de réalisation de l'invention monté sur un retour de carrosserie, le bourrelet d'étanchéité étant en position droite ;
. la figure 8 est une vue en coupe transversale d'un joint périmétrique à l'état libre selon le troisième mode de réalisation de l'invention, le bourrelet d'étanchéité étant en position basculée ;
. la figure 9 est une vue en perspective d'un tronçon de joint périmétrique selon le troisième mode de réalisation de l'invention à l'état libre, le bourrelet d'étanchéité étant en position droite ;
. la figure 10 est une vue en perspective d'un tronçon de joint périmétrique selon le troisième mode de réalisation de l'invention dans le cas d'une prise de rayon, le bourrelet d'étanchéité étant basculé au niveau de la courbure.

Le joint selon la présente invention va maintenant être décrit de façon détaillée en référence aux figures 1 à 10. Les éléments équivalents représentés sur les différentes figures porteront les mêmes références numériques.

Un mode de réalisation d'un joint profilé 1 selon l'invention a été représenté en situation, monté sur un rebord 2, par exemple métallique, constituant l'encadrement de l'ouverture du coffre 3 d'un véhicule automobile 4 sur la vue d'ensemble en perspective de la figure 1.

Sur les différentes figures, le joint profilé représenté correspond à des modes de réalisation particuliers de l'invention destinés à un encadrement d'ouverture de coffre ou de capot moteur pour un véhicule automobile.

Il doit cependant être compris qu'il ne s'agit que d'exemples préférentiels de réalisation de l'invention, l'homme du métier pouvant sans difficulté y apporter les modifications nécessaires pour l'adapter à d'autres applications sans sortir du cadre de la présente invention.

Le joint profilé 1 selon l'invention comprend une partie d'accrochage 5 sur laquelle est solidarisé un bourrelet d'étanchéité 6.

Le bourrelet d'étanchéité 6 est un profilé tubulaire creux réalisé à partir d'une matière thermoplastique ou élastomérique souple, ce qui lui permet de s'écraser lorsque la face intérieure du capot ou du hayon 7 par exemple, vient s'appuyer contre lui en position de fermeture et ainsi d'assurer une certaine étanchéité.

De manière préférentielle, le bourrelet 6 est réalisé en une matière plastique souple. Ainsi, le joint profilé 1 peut être entièrement composé de matières plastiques.

Le bourrelet 6 peut, par exemple, comporter une lèvre longitudinale 8 en partie supérieure, améliorant le contact avec la paroi du capot ou du hayon 7 et renforçant ainsi l'étanchéité.

Dans les différentes variantes représentées, le bourrelet d'étanchéité 6 s'étend longitudinalement au-dessus de la partie d'accrochage 5.

Le bourrelet d'étanchéité 6 est solidarisé à la partie d'accrochage 5 au moyen d'une bande continue de liaison 9 qui réalise la jonction de préférence entre la partie inférieure 10 du bourrelet d'étanchéité 6 et la partie d'accrochage 5.

La partie d'accrochage 5 présente une section de forme générale en U devant être chaussée avec un effet de pincement sur le rebord 2 de tôle à équiper, comme on peut le voir sur les figures 3 et 7.

La structure de base de la partie d'accrochage 5 est de préférence réalisée en une matière plastique rigide ou semi-rigide.

Elle comporte deux branches latérales 11 et 12 en regard l'une de l'autre et s'étendant globalement vers le bas.

Ces branches 11 et 12 sont réunies au niveau de leur partie supérieure par une liaison en pont 13 sensiblement horizontale et délimitent entre elles un canal de réception 14 pour la bordure 2 de carrosserie à équiper.

Différents modes de réalisation peuvent être envisagés pour la partie d'accrochage 5 qui n'est pas essentielle pour l'invention et peut donc être quelconque. Quelques exemples ont été représentés sur les figures 4 à 6.

La partie d'accrochage 5 de la figure 4 présente des caractéristiques déjà protégées par ailleurs par le déposant.

Dans ce mode de réalisation, les deux branches latérales 11 et 12 sont de longueur différente et s'étendent globalement vers le bas en restant sensiblement parallèles, mais de façon non rectiligne.

Après un tronçon supérieur sensiblement vertical, elles s'inclinent à environ 45° par rapport à la verticale, puis reviennent vers le côté opposé selon un angle voisin de 90°. La branche la plus longue se prolonge ensuite par une extrémité sensiblement verticale.

Le canal de réception 14 présente ainsi une largeur sensiblement constante et un profil sensiblement en forme de S.

Les branches latérales 11 et 12 de la partie d'accrochage comportent chacune un patin d'appui 15, réalisé en une matière plastique à propriété de friction élevée, disposé au niveau d'une zone destinée à se trouver en contact avec le rebord à équiper.

Dans le mode de réalisation de la figure 5, les branches 11 et 12 sont sensiblement verticales et de même longueur.

Elles comportent sur leurs parois extérieures des déformations 16 qui facilitent la préhension du joint par l'opérateur-poseur lors de sa mise en place. Pour ne pas gêner les opérations de calibrage, les déformations 16 sont de préférence réalisées en creux et non en saillie. Il s'agit par exemple de rainures longitudinales comme représenté.

De manière classique, la face intérieure des branches latérales 11 et 12 peut comporter une ou plusieurs lèvres de retenue réalisées en une matière plus souple et/ou de friction élevée.

Ainsi, le mode de réalisation de la figure 5 comprend quatre plots de coincement 17, se faisant face deux à deux, destinés à venir en appui de coincement contre le rebord de carrosserie et à réaliser une fonction d'anti-boitement. L'un de ces plots présente une forme particulière en lèvre anti-retour 18 et s'oppose par arc-boutement à tout retrait accidentel du joint.

Le mode de réalisation représenté sur la figure 6 est de structure similaire à celui de la figure 5, mais ne comporte pas de lèvres de retenue ou de plots de coincement à l'intérieur de son canal de réception 14.

La retenue sur le rebord de tôle de carrosserie 2 est réalisée par collage au moyen d'une matière adhésive, de préférence un cordon de colle 19 par exemple de type polyuréthane. Le cordon de colle 19 peut être formé, par exemple en fond de canal, simultanément à l'extrusion de la partie d'accrochage 5.

Cette variante est particulièrement avantageuse, car elle permet une simplification des opérations d'extrusion grâce à la structure très simple du joint profilé 1 et à l'absence d'éléments dans le canal de réception 14. En outre, elle répond parfaitement aux exigences requises pour un tel joint profilé. En effet, le canal de réception étant libre l'effort de montage est faible, mais grâce au collage l'effort nécessaire pour l'arrachage est très important.

Pour des raisons de simplification, cette variante de la structure d'accrochage a également été représentée sur les figures 2, 3 et 7 à 10. Cependant, toute autre variante de la structure d'accrochage pourra être utilisée sans sortir du cadre de la présente invention.

Selon une caractéristique essentielle de l'invention, la bande de liaison 9, reliant le bourrelet d'étanchéité 6 à la partie d'accrochage 5, est excentrée par rapport au plan de la partie d'accrochage ou à l'axe médian longitudinal 20 de la liaison en pont 13 de la partie d'accrochage 5. Elle se trouve ainsi excentrée par rapport à la fibre neutre du pliage de prise de courbure dans une direction globalement perpendiculaire au flanc du profilé, qui est située au niveau de cet axe.

Cette configuration de la zone de jonction entre les deux parties, 5 et 6, constitutives du joint profilé est particulièrement originale.

En effet, dans les joints profilés de ce type connus dans l'art antérieur, la jonction entre le bourrelet d'étanchéité 6 et la partie d'accrochage 5 s'effectue classiquement au niveau de cet axe médian longitudinal 20 ou de manière symétrique à celui-ci comme c'est le cas dans le joint antérieur 21 représenté sur la figure 2.

Sur ce joint antérieur 21, la partie 10 du bourrelet d'étanchéité 6 est solidarisée sur toute l'étendue de la liaison en pont 13 de la partie d'accrochage 5. Dans le cas d'une courbure dans une direction globalement perpendiculaire au flanc du profilé, le bourrelet d'étanchéité ne peut réaliser aucun mouvement d'adaptation limitant la prise de courbure. Sa paroi latérale située sur l'extérieur de la courbe se trouve étirée et sa paroi latérale située du côté intérieur de la courbe est comprimée. Il se forme alors sur cette dernière paroi, une série de plis successifs 22 particulièrement inesthétiques.

Au contraire, la configuration avantageuse de la zone de jonction du profilé selon l'invention 1 évite au bourrelet 6 de s'écraser et de se plisser de manière inesthétique lors de la prise de courbes à rayons faibles ou d'angles sans coupe d'onglet.

Dans le cas d'une prise de courbure dans une direction globalement perpendiculaire au flanc du profilé, comme représenté sur les figures 3, 8 et 10, le bourrelet 6 bascule en direction de la zone libre de la partie d'accrochage 5 au niveau de la courbure, ce qui limite sa déformation et évite l'apparition de plis.

Ce basculement est favorisé par une inclinaison appropriée de la bande de liaison 9 par rapport au plan de la partie d'accrochage 5 comme représenté sur les différentes figures.

De façon préférentielle, la bande de liaison 9 comporte une amorce de pliage, par exemple sous la forme d'une zone d'épaisseur réduite 23 jouant un rôle de charnière.

En fin de basculement, le bourrelet d'étanchéité 6 arrive en butée contre la partie d'accrochage 5.

Avantageusement, cette dernière peut comporter en partie supérieure un relief d'appui 24 contre lequel vient s'appuyer le bourrelet d'étanchéité. Ce relief d'appui 24 permet de limiter le basculement du bourrelet 6 afin que celui-ci conserve des qualités optimales d'étanchéité et d'insonorisation quelle que soit sa configuration.

Sur les modes de réalisation préférentiels représentés, la partie supérieure de la partie d'accrochage 5 est réalisée de façon symétrique. Ainsi un relief tel que 24 se trouve de chaque côté, conférant à celle-ci une forme de section dite « en enclume ».

De manière évidente, l'homme du métier pourra trouver de nombreuses autres variantes pour le joint profilé selon l'invention.

Par exemple, un joint profilé selon l'invention dont le bourrelet d'étanchéité 6 est d'épaisseur variable, certains endroits appropriés étant plus fins de manière à favoriser l'écrasement du bourrelet.

Il est cependant clair que toutes ces variantes restent comprises dans la portée de l'invention définie par les revendications qui vont suivre.

## Revendications

1. Joint profilé périmétrique (1), destiné à être monté sur un rebord (2) susceptible de présenter une courbure à faible rayon sensiblement perpendiculaire au flanc du rebord et s'étendant notamment dans l'encadrement d'un ouvrant de carrosserie automobile, joint comprenant une partie d'accrochage (5) à section de forme générale en U devant être chaussée à pincement sur ce rebord (2) et un bourrelet souple d'étanchéité (6) s'étendant longitudinalement le long d'une des faces extérieures de la partie d'accrochage, la partie d'accrochage (5) comportant deux branches (11, 12) en regard l'une de l'autre, réunies au niveau de leur partie supérieure par une liaison en pont (13) sensiblement horizontale et délimitant entre elles un canal de réception (14) pour le rebord (2), et
le bourrelet d'étanchéité (6) est relié à la partie d'accrochage (5) par une bande continue de liaison (9) excentrée par rapport à l'axe de la fibre neutre du pliage de prise de courbure dans une direction globalement perpendiculaire au flanc latéral du profilé, permettant au bourrelet d'étanchéité (6) de basculer en direction de la zone libre de la partie d'accrochage (5) en cas de prise de courbure dans une direction globalement perpendiculaire au flanc latéral du profilé, **caractérisé**
**en ce que** la bande de liaison (9) comporte une amorce de pliage formée d'une zone d'épaisseur réduite (23) jouant un rôle de charnière.

2. Joint profilé selon la revendication précédente **caractérisé en ce que** la bande continue de liaison (9) réalise la jonction entre la partie inférieure (10) du bourrelet d'étanchéité (6) et la partie d'accrochage (5).

3. Joint profilé selon l'une quelconque des revendications précédentes **caractérisé en ce que** la bande de liaison (9) présente un angle d'inclinaison par rapport au plan de la partie d'accrochage qui favorise le basculement du bourrelet d'étanchéité (6) en cas de prise de courbure par le joint profilé (1) dans une direction globalement perpendiculaire au flanc latéral du profilé.

4. Joint profilé selon l'une quelconque des revendications précédentes **caractérisé en ce que** la partie d'accrochage (5) comporte un relief d'appui (24) contre lequel vient s'appuyer le bourrelet d'étanchéité (6) en fin de basculement.

5. Joint profilé selon la revendication précédente **caractérisé en ce que** le relief d'appui (24) se trouve en partie supérieure de la partie d'accrochage (5) et **en ce que** la partie supérieure de la partie d'accrochage (5) est réalisée de façon symétrique avec un relief (24) de chaque côté, conférant à celle-ci une forme de section dite en enclume.

6. Joint profilé selon l'une quelconque des revendications précédentes **caractérisé en ce que** la face extérieure des branches latérales (11, 12) de la partie d'accrochage (5) comporte des déformations (16) réalisées en creux, facilitant la préhension du joint.

7. Joint profilé selon l'une quelconque des revendications précédentes **caractérisé en ce que** la face intérieure des branches latérales (11, 12) de la partie d'accrochage (5) comporte au moins une lèvre de retenue ou plot de coincement (17, 18) réalisé(e) en une matière plus souple et/ou de friction élevée.

8. Joint profilé selon l'une quelconque des revendications précédentes **caractérisé en ce qu'**il comporte en outre un cordon de colle (19) formé simultanément à l'extrusion de la partie d'accrochage (5) et destiné à assurer la retenue du joint profilé (1) sur le rebord (2).

## Claims

1. A shaped perimeter element (1) designed for attachment to a rim (2) capable of forming a curve with a small radius essentially perpendicular to a side of the rim and specifically extending in a frame of an opening in an automobile body, the element comprising an attaching portion (5) with a generally U-shaped cross section which must be compressed in order to attach to the rim (2) and a flexible cushion seal (6) extending longitudinally along an exterior surface of the attaching portion, the attaching portion (5) comprising two branches (11,12) opposite each other, joined at a level of an upper portion by an essentially horizontal bridge connection (13) and defining a reception channel (14) for the rim (2), and the cushion seal (6) being connected to the attaching portion (5) by a continuous connecting strip (9) that is offset in relation to an axis of a neutral bending fiber following a curve in a globally perpendicular direction to a lateral side of the shaped perimeter element, thereby permitting the cushion seal (6) to tilt toward a free area on the attaching portion (5) when there is the curve in the globally perpendicular direction to the lateral side of the shaped perimeter element **characterized in that** the connecting strip (9) comprises an area that bends and that has a reduced thickness (23) and serves as a hinge for the shaped perimeter element.

2. The shaped perimeter element according to the preceding claim, **characterized in that** the continuous connecting strip (9) forms a junction between a lower portion (10) of the cushion seal (6) and the attaching portion (5).

3. The shaped perimeter element according to any of the preceding claims, **characterized in that** the connecting strip (9) is inclined at an angle relative to a plane of the attaching portion which facilitates tilting by the cushion seal (6) when the shaped perimeter element (1) curves in the globally perpendicular direction to the lateral side of the shaped perimeter element.

4. The shaped perimeter element according to any of the preceding claims **characterized in that** the attaching portion (5) comprises a raised contact area (24) which abuts with the cushion seal (6) after tilting.

5. The shaped perimeter element according to claim 4, **characterized in that** the the contact area (24) is located on an upper portion of the attaching portion (5) and the upper portion of the attaching portion (5) is symmetrically shaped and has a raised area (24) on a first side and a second side that provides the attaching portion (5) with anvil shape.

6. The shaped perimeter element according to any of the preceding claims, **characterized in that** the exterior surface of the two branches (11,12) of the attaching portion (5) comprises hollow deformations (16) which facilitate gripping of the shaped perimeter element.

7. The shaped perimeter element according to any of the preceding claims, **characterized in that** an interior surface of the lateral branches (11,12) of the attaching portion (5) comprises at least one of a retaining lip and a wedge point (17,18) made from at least one of a flexible and high friction material.

8. The shaped perimeter element according to any of the preceding claims, **characterized in that** the perimeter element further comprises a bead of glue (19) formed simultaneously with extrusion of the attaching portion (5) and for ensuring that the shaped perimeter element (1) is retained on the rim (2).

## Patentansprüche

1. Umfangs-Profildichtung (1), die dazu bestimmt ist, auf einen Rand (2) aufgebracht zu werden, der möglicherweise eine Biegung mit einem geringen Radius im wesentlichen senkrecht zur Flanke des Randes hin aufweisen kann und die sich unter anderem in dem Öffnungsrahmen einer Kraftfahrzeugkarosserie erstreckt, wobei die Dichtung ein Befestigungsteil (5) mit einem im allgemeinen U-förmigen Abschnitt umfasst und auf diesen Rand (2) aufgepresst werden muss und einen geschmeidigen Abdichtungsstreifen (6) umfasst, der sich in der Längsrichtung entlang einer der Außenseiten des Befestigungsteils erstreckt, wobei das Befestigungsteil (5) zwei einander gegenüberliegende Bügel (11, 12) umfasst, die auf der Ebene von deren Oberteil durch eine im wesentlichen horizontale, brückenförmige Verbindung (13) zusammengefasst sind und untereinander einen Aufnahmekanal (14) für den Rand (2) begrenzen, und der Abdichtungsstreifen (6) mit dem Befestigungsteil (5) durch ein durchgehendes Verbindungsband (9) verbunden ist, das exzentrisch zur Achse der neutralen Faser der Faltung liegt, die die Biegung in einer insgesamt senkrechten Richtung zur Seitenflanke des Profilstücks einschlägt, wodurch der Abdichtungsstreifen (6) eine Möglichkeit hat, in der Richtung der freien Zone des Befestigungsteils (5) beim Einschlagen der Biegung in einer insgesamt senkrechten Richtung zur Seitenflanke des Profilstücks abzugleiten, **dadurch gekennzeichnet, dass** das Verbindungsband (9) einen Biegungsansatz umfasst, der von einem Bereich verringerter Dicke (23) ausgebildet ist, der die Aufgabe eines Scharniers erfüllt.

2. Profildichtung nach dem vorangehenden Anspruch, **gekennzeichnet dadurch, dass** das durchgehende Verbindungsband (9) die Verbindung zwischen dem Unterteil (10) des Abdichtungsstreifens (6) und dem Befestigungsteil (5) herstellt.

3. Profildichtung nach einem der vorangehenden Ansprüche, **gekennzeichnet dadurch, dass** das Verbindungsband (9) einen Neigungswinkel zur Ebene des Befestigungsteils hin aufweist, der das Abgleiten des Abdichtungsstreifens (6) bei der Einbiegung durch die Profildichtung (1) in einer insgesamt senkrechten Richtung zur Seitenflanke des Profilstücks hin fördert.

4. Profildichtung nach einem der vorangehenden Ansprüche, **gekennzeichnet dadurch, dass** das Befestigungsteil (5) eine Abstützerhebung (24) umfasst, gegen welche sich der Abdichtungsstreifen (6) am Ende des Abgleitens abstützt.

5. Profildichtung nach dem vorangehenden Anspruch, **gekennzeichnet dadurch, dass** sich die Abstützerhebung (24) im Oberteil des Befestigungsteils (5) befindet, sowie dadurch, dass das Oberteil des Befestigungsteils (5) symmetrisch mit einer Erhebung (24) an jeder Seite ausgeführt ist, die dem letzteren eine sogenannte ambossartige Querschnittsform verleiht.

6. Profildichtung nach einem der vorangehenden Ansprüche, **gekennzeichnet dadurch, dass** die Außenseite der Seitenbügel (11, 12) des Befestigungsteils (5) hohl ausgestaltete Verformungen (16) umfasst, die das Greifen der Dichtung erleichtern.

7. Profildichtung nach einem der vorangehenden Ansprüche, **gekennzeichnet dadurch, dass** die Innenseite der Seitenbügel (11, 12) des Befestigungsteils (5) mindestens eine Haltelippe oder einen Klemmkontakt (17, 18) umfasst, die aus einem weicheren und/oder aus einem hochreibenden Material hergestellt sind.

8. Profildichtung nach einem der vorangehenden Ansprüche, **gekennzeichnet dadurch, dass** sie außerdem einen Klebestreifen (19) umfasst, der gleichzeitig bei der Extrusion des Befestigungsteils (5) ausgebildet wurde und das sichere Halten der Profildichtung (1) auf dem Rand (2) gewährleisten soll.
